# EUROPÄISCHE PATENTANMELDUNG

(11) **EP 1 850 086 A2**
(43) Veröffentlichungstag der Anmeldung: **31.10.2007**
(21) Anmeldenummer: 07005377.2
(22) Anmeldetag: 15.03.2007
(51) Int. Cl.: G01B 3/06, G01C 9/26

(54) **Vorrichtung zum Feststellen von Neigungen und Abstandswerten**

(30) Priorität: 25.04.2006 DE 202006006919 U
(71) Anmelder: Heine, Nico, 16269 Wriezen (DE)
(72) Erfinder: Heine, Nico, 16269 Wriezen (DE)
(74) Vertreter: Scholz, Hartmut

(57) **Zusammenfassung**

Vorrichtung (10) zum Feststellen von Neigungen und Abstandswerten an und/oder von Objekten, mit einer vorbestimmte Anzahl von ein- und ausklappbaren Messabschnitten (11) beliebiger Länge, von denen mindestens einer ein Aufnahmeabschnitt (12) ist, dem eine Neigungsanzeige (13) zugeordnet ist. Mehrere der ausklappbaren Messabschnitte (11) umfassen eine gemeinsame Aussparung (14) zur Aufnahme einer Neigungsanzeige (13), und die Neigungsanzeige (13) ist mit den ausklappbaren Messabschnitten (11) bündig abschließend in der gemeinsamen Aussparung (14) versenkt eingepasst.

## Beschreibung

Die Erfindung betrifft eine Vorrichtung zum Feststellen von Neigungen und Abstandswerten an und/oder von objekten.

Für die Überprüfung der Neigung eines Gegenstandes gegenüber einer horizontal oder lotrecht verlaufenden Bezugsfläche wird üblicherweise eine Wasserwaage verwendet. Diese ermöglicht es, schnell und unkompliziert, eine Abschätzung darüber treffen zu können, ob sich ein Gegenstand in der Waage befindet.

Für das Messen von Abständen von einem Bezugspunkt zu einem anderen Bezugspunkt wird üblicherweise ein Metermaß oder ein sog. Zollstock verwendet. Möchte man nun die Ausrichtung eines Gegenstandes im Raum überprüfen, wird man hiernach zu einer Wasserwaage greifen. Das Gleiche gilt für das Messen von Abständen, wobei hier natürlich ein wie auch immer geartetes Metermaß verwendet werden wird. Allerdings gibt es Situationen, in denen es wünschenswert ist, sowohl die Ausrichtung des Gegenstandes im Raum als auch gleichzeitig den Abstand des Gegenstandes zu einem wie auch immer gearteten Bezugspunkt bestimmen zu können.

Üblicherweise wird hierbei mit zwei unterschiedlichen Instrumenten, nämlich Wasserwaage und beispielsweise Zollstock, eine Messung durchgeführt werden. Das Hantieren mit zwei unterschiedlichen Werkzeugen begründet wiederum mögliche Fehlerquellen, da diese häufig nicht zeitgleich eingesetzt werden können.

Aufgabe der vorliegenden Erfindung ist es, eine Vorrichtung der eingangs beschriebenen Art zu schaffen, die eine Überprüfung der Neigung eines Objektes gegenüber der Horizontalen oder Lotrechten und dessen Abstand zu einem beliebigen Bezugspunkt erlaubt.

Diese Aufgabe wird durch die in den Patentansprüchen 1 bis 10 angegebenen Merkmale gelöst, insbesondere durch eine vorbestimmte Anzahl von ein- und ausklappbaren Messabschnitten beliebiger Länge, von denen mindestens einer ein Aufnahmeabschnitt ist, dem eine Neigungsanzeige zugeordnet ist.

Zur Ausgestaltung ist es dabei vorgesehen, dass mehrere der ausklappbaren Messabschnitte eine gemeinsame Aussparung zur Aufnahme einer Neigungsanzeige umfassen und die Neigungsanzeige mit den ausklappbaren Messabschnitten bündig abschließend in der gemeinsamen Aussparung versenkt eingepasst ist. Durch diese Maßnahme wird sichergestellt, dass die Neigungsanzeige vor direkter Krafteinwirkung relativ gut geschützt ist, sobald die Messabschnitte zusammengeklappt sind.

Durch diese Maßnahme wird eine Vorrichtung geschaffen, mit der es möglich ist, die Neigung einer Abstandsmessvorrichtung, beispielsweise eines Zollstocks, gegenüber der Horizontalen oder der Lotrechten zu einem Gegenstand festzustellen. Messungenauigkeiten, die beispielsweise durch Schräghalten des Messstabes entstehen können, werden so vermieden.

Der Abstand zu einem beliebigen Bezugspunkt im Raum kann dadurch sehr viel genauer gemessen werden. Ferner ist es von Vorteil, dass mit der Abstandsmessvorrichtung zugleich eine Wasserwaage mitgeführt werden kann, die keinen besonderen Platz benötigt. Um die Messgenauigkeit der Neigungsanzeige zu erhöhen, kann der Zollstock ausgeklappt und die Messgenauigkeit dadurch erhöht werden.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- **Figur 1**: eine isometrische Darstellung der erfindungsgemäßen Messvorrichtung in zusammengeklapptem Zustand;
- **Figur 2**: eine isometrische Darstellung der Erfindung in ausgeklapptem Zustand;
- **Figur 3**: eine Draufsicht auf die erfindungsgemäße Messvorrichtung nach den Figuren 1 und 2;
- **Figur 4**: eine Draufsicht auf eine andere Ausführung, mit um 90° versetzt auf dem freien Ende eines Aufnahmeabschnitts eingelassener Neigungsanzeige.

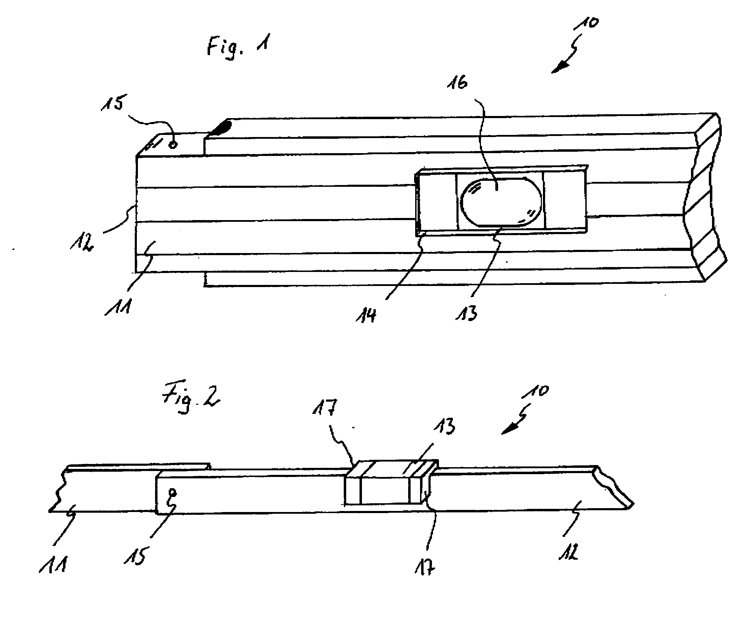

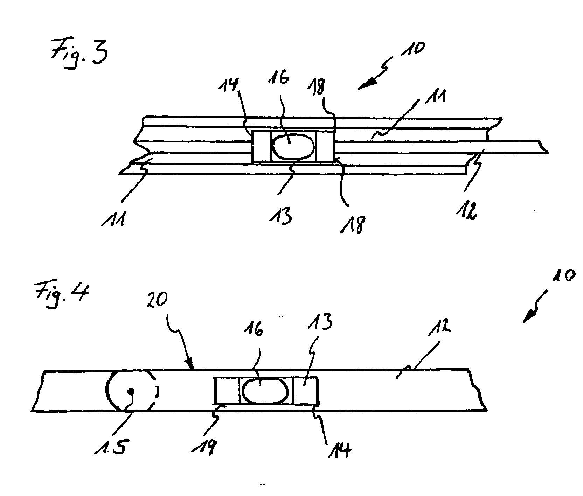

Wie die Figur 1 zeigt, besteht die erfindungsgemäße Messvorrichtung 10 im Wesentlichen aus miteinander verbundenen Messabschnitten 11, die so miteinander verbunden sind, dass sie übereinander drehbar sind. Die Messabschnitte 11 bestehen aus Leisten, die an ihren Oberflächen mit einer Skala beliebiger Maßeinheiten, beispielsweise Zentimetern, versehen sind.

In der Messvorrichtung 10 ist ein Aufnahmeabschnitt 12 vorgesehen, der eine Aussparung 14 aufweist. In die Aussparung 14 ist eine Neigungsanzeige 13 eingepasst, die mit einer Libelle 16 einer Wasserwaage versehen ist.

Die Messabschnitte 11 sind, wie die Figur 2 zeigt, über Scharniere 15 miteinander verbunden. Die Neigungsanzeige 13 ist breiter als der Aufnahmeabschnitt 12 und ragt beiderseits mit seitlichen Überständen 17 über diesen hinaus. Durch dieses Mehr an Breite gegenüber dem Aufnahmeabschnitt 12 wird das Ablesen einer Neigung an der Libelle 16 wesentlich erleichtert.

Wie die Figur 3 anhand einer zusammengeklappten Messvorrichtung 10 zeigt, sind mehrere benachbarte Messabschnitte 11 mit einer gemeinsamen Aussparung 18 versehen. Die Aussparungen 18 nehmen die seitlichen Überstände 17 der Neigungsanzeige 13 bündig abschließend versenkt auf.

Eine solche Wasserwaage besteht üblicherweise aus einem relativ schlagempfindlichen Werkstoff, beispielsweise Glas. Beim rauen Betrieb, beispielsweise auf einer Baustelle, besteht die Gefahr, dass solche Messgeräte beschädigt werden. Durch die bündig abschließende Aufnahme der Neigungsanzeige 13 in den Aussparungen 18 ist diese relativ gegen Krafteinwirkungen geschützt. Dabei ist es möglich, die Messabschnitte 11 über die Scharniere 15 so zu drehen, dass die Messvorrichtung 10 zusammengeklappt werden kann.

Die Überstände 17 der Neigungsanzeige 13 sind fluchtend in den Aussparungen 18 aufgenommen. Die Neigungsanzeige 13 ist dadurch vor mechanischen Belastungen, beispielsweise Stößen und dergleichen, geschützt.

Figur 4 zeigt eine vereinfachte Ausführungsform, in der die Neigungsanzeige 13 am freien Ende 20 in dem Aufnahmeabschnitt 12 eingelassen ist. Der Aufnahmeabschnitt 12 ist dazu mit einem Ausschnitt 19 versehen.

Die Neigungsanzeige 13 ist um 90° gegenüber der Ausführung nach Figur 1 verdreht angeordnet und steht etwas über den Aufnahmeabschnitt 12 über.

Der Ausschnitt 19 weist dazu die Größe und den Umfang der Neigungsanzeigevorrichtung 13 auf. Bei dieser Ausführung brauchen die benachbarten Messabschnitte 11 nicht mit Aussparungen versehen werden. Die Herstellung dieser Messvorrichtung 10 ist dadurch weniger zeit- und kostenaufwendig.

### Bezugszeichen

- 10: Messvorrichtung
- 11: Messabschnitt
- 12: Aufnahmeabschnitt
- 13: Neigungsanzeige
- 14: Aussparung
- 15: Scharnier
- 16: Libelle
- 17: überstand
- 18: Aussparung
- 19: Ausschnitt
- 20: freies Ende

## Patentansprüche

1. Vorrichtung zum Feststellen von Neigungen und Abstandswerten an und/oder von Objekten, **gekennzeichnet durch** eine vorbestimmte Anzahl von einund ausklappbaren Messabschnitten (11) beliebiger Länge, von denen mindestens einer ein Aufnahmeabschnitt (12) ist, dem eine Neigungsanzeige (13) zugeordnet ist.

2. Vorrichtung nach Anspruch 1, **dadurch gekennzeichnet, dass** mehrere der ausklappbaren Messabschnitte (11) eine gemeinsame Aussparung (14) zur Aufnahme einer Neigungsanzeige (13) umfassen und die Neigungsanzeige (13) mit den ausklappbaren Messabschnitten (11) bündig abschließend in der gemeinsamen Aussparung (14) versenkt eingepasst ist.

3. vorrichtung nach den Ansprüchen 1 und 2, **dadurch gekennzeichnet, dass** die Messabschnitte (11) und der Aufnahmeabschnitt (12) an einem Ende gelenkig miteinander verbunden sind und die Neigungsanzeige (13) so in eine Aussparung (14) des Aufnahmeabschnitts (12) eingepasst ist, dass sie vor direkter Krafteinwirkung geschützt ist, sobald die Messabschnitte (11) zusammengeklappt sind.

4. Vorrichtung nach einem der vorangehenden Ansprüche, **dadurch gekennzeichnet, dass** die Messabschnitte (11) und der Aufnahmeabschnitt (12) über solche Scharniere (15) gelenkig miteinander verbunden sind, die ein Durchbiegen verhindern.

5. Vorrichtung nach einem der vorangehenden Ansprüche, **dadurch gekennzeichnet, dass** die Neigungsanzeige (13) die Libelle (16) einer Wasserwaage aufweist.

6. Vorrichtung nach einem der vorangehenden Ansprüche, **dadurch gekennzeichnet, dass** die Messabschnitte (11) und der Aufnahmeabschnitt (12) aus Holz bestehen.

7. vorrichtung nach einem der vorangehenden Ansprüche, **dadurch gekennzeichnet, dass** die Messabschnitte (11) und der Aufnahmeabschnitt (12) aus Kunststoff bestehen.

8. Vorrichtung nach einem der vorangehenden Ansprüche, **dadurch gekennzeichnet, dass** die Abschnitte (11) und der Aufnahmeabschnitt (12) aus einem Leichtmetall bestehen.

9. Vorrichtung nach einem der vorangehenden Ansprüche, **dadurch gekennzeichnet, dass** die Neigungsanzeige (13) einem freien Ende (20) des Aufnahmeabschnitts (12) zugeordnet ist.

10. Vorrichtung nach einem der vorangehenden Ansprüche, **dadurch gekennzeichnet, dass** die Neigungsanzeige (13) dem Aufnahmeabschnitt (12) mittig zugeordnet ist.
